# FASCICULE DE BREVET EUROPEEN

(11) **EP 2 042 035 B1**
(45) Date de publication et mention de la délivrance du brevet: **23.01.2013**
(21) Numéro de dépôt: 08305584.8
(22) Date de dépôt: 24.09.2008
(51) Int. Cl.: A01K 5/02

(54) **Dispositif d'administration de principes actifs à des animaux nourris en salles a partir de distributeurs**
Vorrichtung zur Verabreichung von Wirkstoffen an Tiere, die in Räumen über Futterverteiler ernährt werden
Device for administering active principles to animals fed in rooms from distributors

(30) Priorité: 27.09.2007 FR 0757898
(43) Date de publication de la demande: 01.04.2009
(73) Titulaire: DBS, 64410 Vignes (FR)
(72) Inventeur: Sansot, Bernard, 64410 Vignes (FR)
(74) Mandataire: Fantin, Laurent

(56) Documents cités:
- EP-A- 0 659 337
- EP-A- 0 714 596
- EP-A- 1 082 897

## Description

La présente invention concerne un dispositif d'administration de principes actifs à des animaux nourris en salles.

Pour la suite de la description, on retient comme exemple l'élevage et l'engraissement de porcs mais l'invention est applicable à tous les animaux élevés en salles et nourris à partir de distributeurs y compris les palmipèdes, ainsi que cela va être explicité ci-après.

La nourriture de ces porcs est sous forme plus ou moins liquide allant d'une consistance de soupe à une consistance de pâte épaisse.

Pour l'engraissement des porcs, les animaux sont répartis dans des cases elles-mêmes regroupées en salles. Ces cases comprennent une ou plusieurs auges dans lesquelles les animaux viennent se nourrir.

Dans le cas d'exploitations de grande taille avec un nombre important d'animaux, donc un grand nombre de salles et enfin un nombre élevé d'auges, la distribution est automatisée.

Une telle installation comporte des moyens de préparation de la composition alimentaire, des moyens de distribution sous forme d'un réseau de canalisations comprenant un circuit primaire en boucle fermée, en charge et un circuit secondaire avec des canalisations piquées sur le circuit primaire et débouchant dans les auges pour permettre de délivrer la composition de façon homogène à chacun des différents points déterminés et uniquement ces points déterminés, en quantité requise.

Des électrovannes commandées à distance et des capteurs de dosage permettent de contrôler et de surveiller le bon déroulement des opérations.

Ces électrovannes sont généralement placées en tête de chacune des canalisations du circuit secondaire.

Les capteurs servent à déterminer les quantités délivrées dans chaque auge soit par pesée de l'auge, soit par mesure de diminution du poids des moyens de préparation, soit encore par mesure de débit, tout ceci étant bien connu.

Ainsi, la soupe est composée dans une centrale qui assure le dosage des ingrédients à partir de contenants de stockage, leur introduction dans un mélangeur avec de l'eau et le malaxage de ces ingrédients au sein d'un mélangeur.

Cette soupe ainsi préparée est mise en circulation, généralement par une pompe, à travers le circuit primaire, donc sous charge.

La soupe est délivrée dans chacune des auges concernées par ouverture de la vanne correspondante. La vanne est fermée lorsque la dose prévue a été délivrée. En effet, en fonction de l'âge, de la race, du nombre d'animaux et de nombreux autres paramètres relatifs aux animaux concernés, les compositions varient et il convient de distribuer la bonne composition avec la juste quantité, dans la ou les auges désignées.

Le pilotage est avantageusement réalisé à distance, à partir d'un automate programmable.

La distribution a lieu au moins une fois par jour et de préférence deux fois par jour.

Il existe deux solutions pour le nettoyage du circuit primaire.

Soit il est prévu un circuit de rinçage qui permet de nettoyer le circuit primaire, évitant que des parties organiques s'accumulent et favorisent le développement de bactéries pathogènes. Par contre les canalisations du circuit secondaire ne sont pas nettoyées.

Soit le nettoyage s'effectue simplement lors de l'alimentation de chacune des auges en eau. Dans ce cas, l'eau passe par le circuit primaire et assure partiellement le nettoyage des canalisations.

Plus généralement, c'est la distribution suivante de la soupe qui assure un auto nettoyage.

Des dispositifs ont été mis au point pour éviter au moins partiellement cette prolifération éventuelle en supprimant les sources d'accumulation de matière surtout sur les canalisations secondaires.

Ainsi, il est prévu dans la demande de brevet français N°2 798 039 d'interposer sur chaque canalisation secondaire un dispositif susceptible d'accélérer la vitesse d'écoulement dans cette canalisation secondaire et de supprimer certains effets secondaires liés à la fermeture de la vanne, notamment les coups de bélier ou de pallier certains autres inconvénients comme la délivrance d'une composition partiellement déphasée, l'écoulement dans l'auge elle-même étant trop lent. A cet effet, un bec d'aspiration d'air par dépression permet d'accélérer la vitesse d'écoulement.

Si un tel agencement améliore la situation, il ne pallie pas tous les problèmes.

In subsiste d'autres problèmes liés à la présence d'une concentration d'animaux. Notamment, en cas de soucis sanitaires dans une ou plusieurs salles ou lorsqu'il est nécessaire de distribuer par voie orale des compléments aux animaux de certaines salles, il est difficile de recourir au circuit primaire. En effet, si le produit passe par le circuit primaire, le principe actif peut subsister et être conduit vers d'autres salles lors d'une distribution ultérieure puisque la distribution suivante pousse les résidus de la précédente.

Or certains lots d'animaux, prêts à être abattus par exemple, ne doivent pas receler de traces de certains principes actifs au risque d'être rejetés.

Il faut donc pouvoir introduire des quantités données de principe actif dans les auges au sein de la composition alimentaire, sans passer par le circuit primaire et il faut que ce principe actif se trouve également mélangé de façon la plus homogène possible dans ladite composition.

C'est l'objet de la présente invention de proposer un dispositif d'administration de principes actifs dans une installation centralisée de distribution d'une composition alimentaire liquide ou pâteuse à des lots d'animaux répartis dans au moins deux cases.

L'invention est décrite selon un mode de réalisation particulier, non limitatif, en regard des dessins annexés sur lesquels les différentes figures représentent :
- figure 1 : une installation centralisée de distribution d'une composition alimentaire pour animaux, selon l'art antérieur,
- figure 2 : un premier mode de réalisation d'une installation centralisée avec dispositif de délivrance de principes actifs selon l'art antérieur,
- figure 3 : un second mode de réalisation d'une installation centralisée avec dispositif de délivrance de principes actifs selon l'art antérieur,
- figure 4 : une installation centralisée de distribution d'une composition alimentaire pour animaux, équipée du dispositif d'administration de principes actifs selon la présente invention, et
- figure 5 : une vue de détail d'un mode de réalisation d'un dispositif d'administration selon la présente invention.

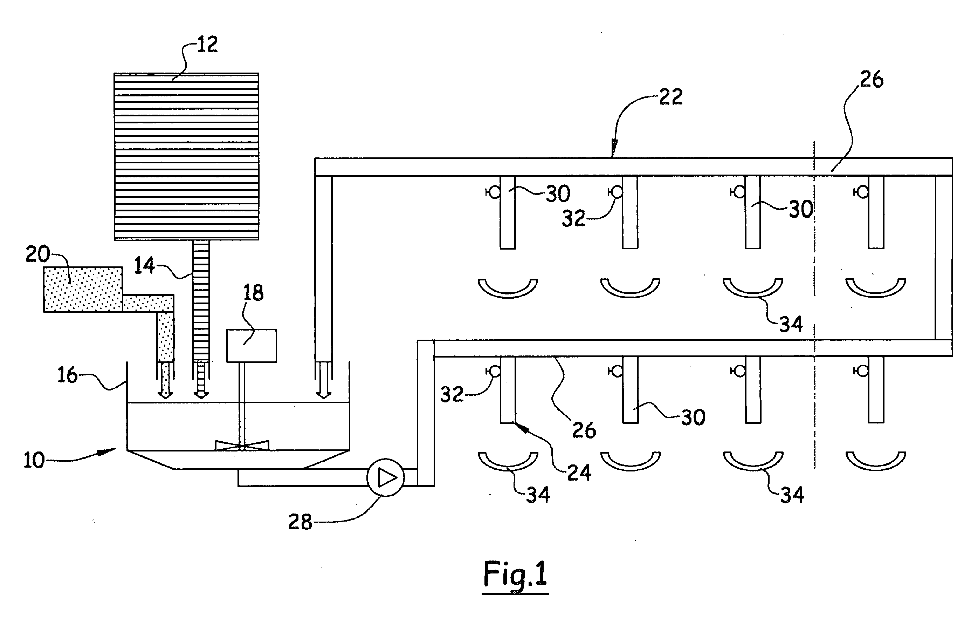

Sur la figure 1, on a représenté une installation 10 comprenant au moins un contenant 12 de stockage de produits alimentaires, d'adjuvants et/ou de compléments alimentaires. Ces différents contenants sont équipés chacun d'une bouche 14 de sortie qui alimente un mélangeur 16 équipé de moyens 18 motorisés de malaxage.

Une alimentation 20 en eau permet aussi de conduire de l'eau dans ledit mélangeur 16.

Des moyens de pesée ou de mesure de volume sont associés à ces différentes alimentations de sorte à pouvoir doser les quantités de produits destinés à constituer la composition alimentaire recherchée.

L' installation 10 comprend un circuit primaire 22 et un circuit secondaire 24.

Le circuit primaire 22 comprend une canalisation unique 26 en boucle fermée. Des moyens 28 de pompage assurent la circulation sous charge de la composition contenue dans le mélangeur 16 au sein de ce circuit primaire 22.

Le circuit secondaire 24 est composé de canalisations 30 piquées sur la canalisation 26 du circuit primaire 22.

Chaque canalisation est munie d'une vanne 32, plus particulièrement commandée électriquement de façon à pouvoir centraliser les commandes d'ouverture et de fermeture.

Chaque canalisation 30 du circuit secondaire 24 est débouchante et dirigée vers une auge 34. Ces auges 34 sont généralement réparties dans des cases séparées à raison d'une ou plusieurs cases par salle.

Cet agencement de l'art antérieur fonctionne de façon connue de la façon suivante :
- préparation de la composition alimentaire dans le mélangeur 16 par introduction dans ledit mélangeur des quantités requises de produits alimentaires, compléments et eau,
- mélange de l'ensemble dans le mélangeur 16 pour réaliser une soupe dont la consistance peut être liquide ou plus ou moins pâteuse en fonction des besoins,
- mise en service des moyens 28 de pompage pour provoquer la mise en circulation de la composition dans la canalisation 24 du circuit primaire 22,
- ouverture d'au moins une vanne 32 afin d'alimenter l'auge 34 associée avec la composition alimentaire à travers la canalisation 30 correspondante,
- arrêt de la circulation lorsque le mélangeur 16 est vide.

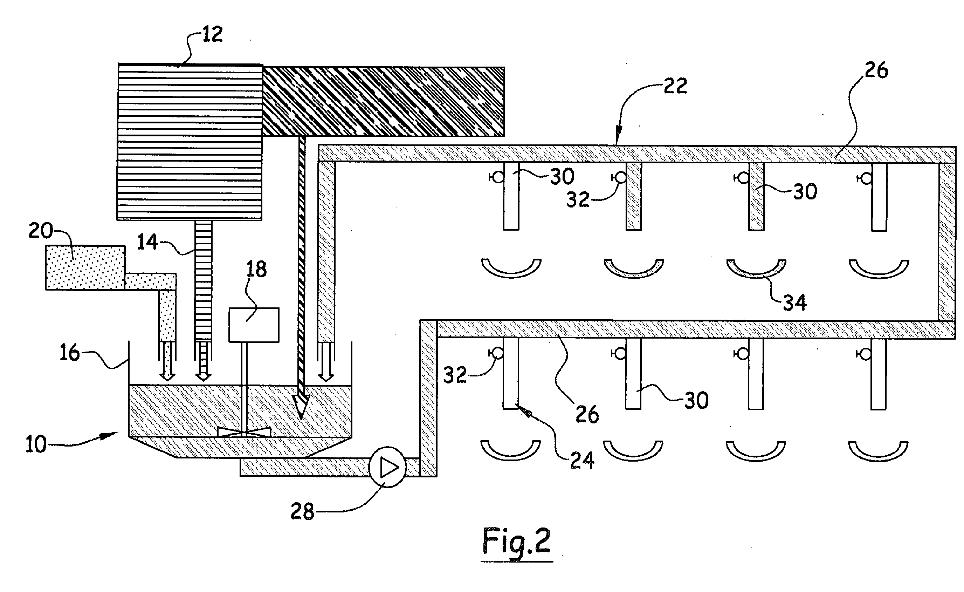

Dans l'art antérieur, si le responsable de l'installation a l'obligation de traiter au moins une des salles avec un principe actif ou un additif à visée nutritionnelle, zootechnique, homéopathique ou phytothérapique, la solution consiste, comme montré sur la figure 2, à introduire ce principe actif et/ou additif, à partir d'un réservoir 36, dans le circuit primaire 22 et plus particulièrement dans le mélangeur 16. Ce mélangeur 16 ne contient alors que la quantité nécessaire aux auges des cases dont les animaux doivent recevoir ce principe actif et/ou cet additif.

Ainsi, la composition alimentaire inclut le principe actif et/ou additif. Il suffit alors de distribuer la composition complémentée dans les auges des cases concernées en ouvrant les vannes correspondantes.

Ensuite, il faut préparer une nouvelle composition pour alimenter les auges des auges qui n'ont pas encore reçu de composition alimentaire, sans alimenter de nouveau les auges des cases déjà servies.

Lors de cette seconde distribution, les restes de principe actif et/ou d'additif dans la canalisation primaire se mélangent avec la seconde composition et se trouvent distribués dans les auges des cases qui n'ont pas à en recevoir.

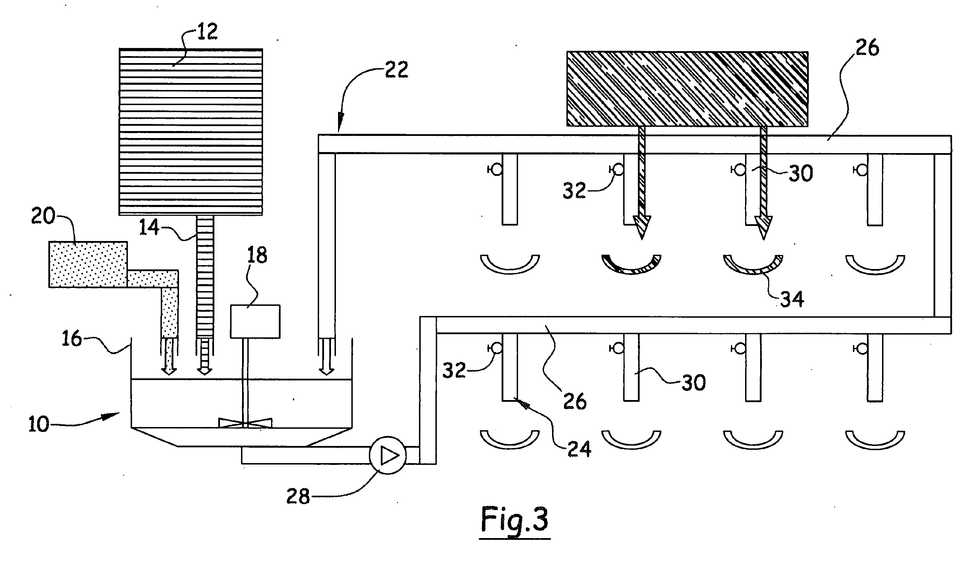

Une solution plus satisfaisante est représentée sur la figure 3.

Dans ce cas, on assure la distribution auge par auge avec un circuit 38 commun, séparé, isolé du circuit primaire mais qui est son double.

La première remarque est que l'installation est rendue plus complexe et donc plus chère.

Surtout, une telle installation n'est pas satisfaisante car la répartition du principe actif et/ou de l'additif n'est pas constante et homogène sur toute la longueur de l'auge. Comme les animaux ne consomment pas le principe actif distribué, ils attendent la distribution de la composition alimentaire. Or, lorsque la composition alimentaire est distribuée, le principe actif et/ou l'additif se trouve poussé vers les extrémités de l'auge, les animaux n'ingurgitant alors pas la même quantité dudit principe actif et/ou additif.

Si la distribution est effectuée manuellement dans chacune des auges, alors la situation est encore plus astreignante pour l'opérateur qui a tendance à simplifier le traitement en diminuant le nombre de prises et en augmentant les quantités, voire en raccourcissant la durée du traitement.

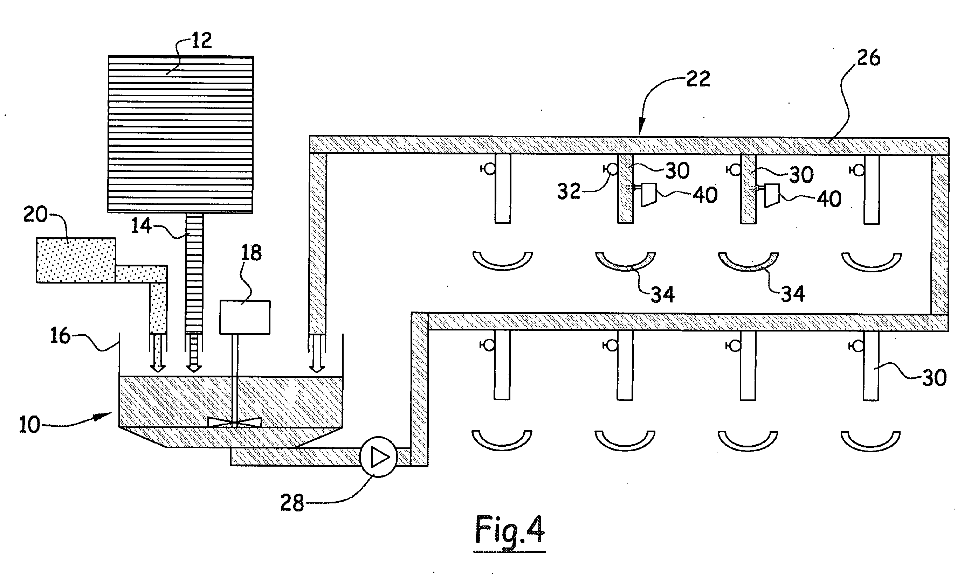

Sur la figure 4, on a représenté l'installation équipée du dispositif 40 d'administration selon la présente invention.

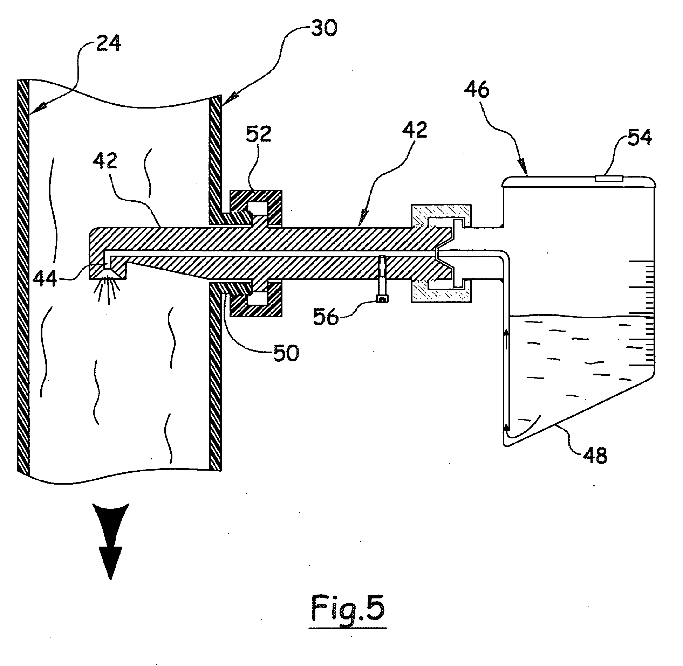

Comme montré en détail sur la figure 5, ce dispositif 40 comprend une canne 42 destinée à être introduite par un piquage dans une canalisation 30 du circuit secondaire 24, en aval de la vanne 32 par rapport au sens d'écoulement de la composition. Cette canne 42 comprend un ajutage 44 orienté dans le sens de l'écoulement pour obtenir un effet venturi avec une dépression importante liée au débit.

Cette canne est reliée à un réservoir 46, de façon préférentielle un réservoir individuel. Un tel réservoir est gradué et comprend un fond 48 incliné de façon à permettre de concentrer le contenu et de le vider intégralement.

Ce réservoir 46 peut être avantageusement directement solidaire de la canne 42. On note que la canne peut être montée de façon fixe ou de façon amovible, donc susceptible d'être déplacée en fonction des besoins.

Dans ce cas, il convient de prévoir un piquage 50 sur la canalisation 30, muni d'un bouchon, non représenté, pour obturer ledit piquage lorsque la canne 42 est retirée.

Pour l'installation, il suffit de retirer le bouchon et de monter la canne avec une bague 52 qui se visse en lieu et place dudit bouchon.

Un clapet 54 sur le réservoir permet une mise à l'air libre du contenu.

Ainsi, lorsque la composition alimentaire s'écoule dans la canalisation 30 concernée du circuit secondaire 24, il se produit une dépression au droit de l'ajutage 44, ce qui conduit à l'aspiration du principe actif et/ou additif préparé dans le réservoir 46.

Cette dépression est d'une durée proportionnelle à la durée de distribution, donc intimement liée à cette durée de distribution.

Cet agencement est particulièrement avantageux pour plusieurs raisons.

Il est possible de ne traiter strictement que les auges qui doivent l'être.

De plus, la canne 42 étant située en aval de la vanne 32, le circuit primaire ne peut donc pas être contaminé.

Le principe actif et/ou l'additif est distribué simultanément à la composition alimentaire et mélangé à elle dans l'auge puisqu'ils s'écoulent simultanément, assurant ainsi une répartition très homogène.

Le débit de la canne 42 étant connu et étudié pour la présente application, le volume de principe actif et/ou d'additif dans son solvant au sein du réservoir 46 est ajusté pour permettre une distribution totale en une prise ou une répartition sur plusieurs prises, en fonction des besoins. Chaque distribution de composition alimentaire aspire une quantité donnée du volume du réservoir 46.

Pour favoriser une adaptation optimisée du contenu du réservoir 46 en fonction de la viscosité par exemple de la composition alimentaire distribuée, de la dépression engendrée et du temps de distribution, la canne 42 ou le réservoir 46 est équipée de moyens 56 de réglage de la dépression, par une simple vis pointeau par exemple.

Si le dispositif d'administration est amovible, il est possible de le retirer, ce qui évite d'introduire dans le circuit secondaire une source supplémentaire d'accumulation de résidus.

De plus, il suffit de disposer de quelques dispositifs pour traiter les salles concernées et non d'un dispositif par canalisation 30 du circuit secondaire.

Si le dispositif est démontable mais monté à demeure sur chaque canalisation 30, alors l'installation ainsi totalement équipée est pratique car l'opérateur n'a besoin que de venir connecter par un raccord, le réservoir 46 à la canne 42 lorsque cela est nécessaire, le réservoir 46 contenant le principe actif et/ou l'additif à administrer, préalablement préparé.

Il est aussi possible de prévoir une installation fixe en interposant un ensemble composé d'un manchon avec canne sur chaque canalisation 30. Le montage est très simple et rapide.

L'intérêt de la présente invention est aussi de pouvoir utiliser des réservoirs qui sont prêts à l'emploi avec le principe actif et/ou les compléments déjà dilués dans un solvant et commercialisé ainsi, le réservoir étant à usage unique et constituant l'emballage même. Dans ce cas, l'opérateur n'a plus qu'à désoperculer, ouvrir ou perforer le réservoir et à le connecter sur la canne en place. Ceci évite aussi des contaminations et des nettoyages.

Le dispositif n'intègre aucun élément mécanique et ne peut donc pas être source de panne.

Le coût de fabrication est compatible avec les avantages procurés et le montage ne modifie pas les installations existantes que ce dispositif soit monté sur une installation neuve ou existante.

La liaison du réservoir 46 sur la canne 42 peut aussi être un simple réservoir et un tuyau souple avec des embouts adaptés.

Ces équivalents techniques de montage sont inclus dans la présente invention.

## Revendications

1. Dispositif d'administration de principes actifs et/ou additifs à des animaux nourris en salles à partir d'un circuit (22) primaire en boucle fermée permettant la circulation d'une composition alimentaire pour lesdits animaux et d'un circuit secondaire (24) comprenant au moins une canalisation (30) de distribution de cette composition, piquée sur le circuit (22) primaire, cette canalisation (30) de distribution comportant une vanne (32), **caractérisé en ce qu'**il comprend une canne (42) destinée à être introduite par un piquage (50) dans au moins une canalisation (30) du circuit secondaire (24), en aval de la vanne (32) par rapport au sens d'écoulement de la composition, ladite canne (42) étant munie d'un ajutage (44) pour obtenir un effet venturi et un réservoir (46) relié à ladite canne (42) contenant lesdits principes actifs et/ou additifs.

2. Dispositif d'administration de principes actifs et/ou additifs selon la revendication 1, **caractérisé en ce que** le réservoir (46) est directement rapporté de façon amovible sur la canne (42).

3. Dispositif d'administration de principes actifs et/ou additifs selon la revendication 1 ou 2, **caractérisé en ce que** la canne (42) est montée amovible sur le piquage (50).

4. Dispositif d'administration de principes actifs et/ou additifs selon l'une quelconque des revendications précédentes, **caractérisé en ce que** la canne (42) ou le réservoir (46) est équipée de moyens (56) de réglage de la dépression.

5. Dispositif d'administration de principes actifs et/ou additifs selon l'une quelconque des revendications précédentes, **caractérisé en ce que** le réservoir comprend un fond (48) incliné de façon à permettre de concentrer le contenu.

## Claims

1. A device for administering active principles and/or additives to animals fed indoors from a primary closed-loop circuit (22) for circulating a food composition for said animals and a secondary circuit (24) comprising at least one pipe (30) for distributing this composition, connected to the primary circuit (22), this distribution pipe (30) comprising a valve (32), **characterised in that** it comprises a tube (42) intended to be inserted through a connection piece (50) into at least one pipe (30) in the secondary circuit (24), downstream from the valve (32) with respect to the direction of flow of the composition, said tube (42) being provided with a nozzle (44) for obtaining a venturi effect and a reservoir (46) connected to said tube (42) containing said active principles and/or additives.

2. A device for administering active principles and/or additives according to claim 1, **characterised in that** the reservoir (46) is directly attached removably to the tube (42).

3. A device for administering active principles and/or additives according to claim 1 or 2, **characterised in that** the tube (42) is mounted removably on the connection piece (50).

4. A device for administering active principles and/or additives according to any one of the preceding claims, **characterised in that** the tube (42) or the reservoir (46) is equipped with means (56) of adjusting the negative pressure.

5. A device for administering active principles and/or additives according to any one of the preceding claims, **characterised in that** the reservoir comprises a bottom (48) inclined so as to concentrate the content.

## Patentansprüche

1. Vorrichtung zur Verabreichung von Wirkstoffen und/oder Zusatzstoffen an Tiere, die in Räumen durch eine primäre Leitung (22) ernährt werden, die einen geschlossenen Kreis bildet und die die Zirkulation einer Nährzusammensetzung für die Tiere gestattet, und durch eine sekundäre Leitung (24), die wenigstens einen von der primären Leitung (22) abzweigenden Kanal (30) für die Verteilung der Zusammensetzung aufweist, wobei der Kanal (30) für die Verteilung einen Verschluss (32) aufweist, **dadurch gekennzeichnet, dass** sie ein Rohr (42) aufweist, das dazu bestimmt ist, in Strömungsrichtung der Zusammensetzung vor dem Verschluss (32) durch eine Abzweigung (50) in wenigstens einem Kanal (30) der sekundären Leitung (24) eingeführt zu werden, wobei das Rohr (42) mit einer Düse (44) versehen ist, um einen Venturi-Effekt zu erzielen, und mit einem mit dem Rohr (42) verbundenen Behälter (46) versehen ist, der die Wirkstoffe und/oder Zusatzstoffe enthält.

2. Vorrichtung zur Verabreichung von Wirkstoffen und/oder Zusatzstoffen nach Anspruch 1, **dadurch gekennzeichnet, dass** der Behälter (46) auf lösbare Weise unmittelbar am Rohr (42) angebracht ist.

3. Vorrichtung zur Verabreichung von Wirkstoffen und/oder Zusatzstoffen nach Anspruch 1 oder 2, **dadurch gekennzeichnet, dass** das Rohr (42) lösbar an der Abzweigung (50) angebracht ist.

4. Vorrichtung zur Verabreichung von Wirkstoffen und/oder Zusatzstoffen nach einem der vorhergehenden Ansprüche, **dadurch gekennzeichnet, dass** das Rohr (42) oder der Behälter (46) mit Mitteln (56) zum Einstellen des Unterdrucks versehen sind.

5. Vorrichtung für die Verabreichung von Wirkstoffen und/oder Zusatzstoffen nach einem der vorhergehenden Ansprüche, **dadurch gekennzeichnet, dass** der Behälter einen geneigten Boden (48) aufweist, um die Sammlung des Inhalts zu ermöglichen.
